# EUROPEAN PATENT SPECIFICATION

(11) **EP 4 432 973 B1**
(45) Date of publication and mention of the grant of the patent: **24.09.2025**
(21) Application number: 22817919.8
(22) Date of filing: 14.11.2022
(51) Int. Cl.: A61C 17/34

(54) **DRIVETRAIN ASSEMBLIES FOR GENERATING SWEEPING MOTION AND POWER TAPPING MOTION**
ANTRIEBSSTRANGANORDNUNGEN ZUR ERZEUGUNG VON KEHRBEWEGUNG UND LEISTUNGSABGRIFFSBEWEGUNG
ENSEMBLES DE TRANSMISSION POUR GÉNÉRER UN MOUVEMENT DE BALAYAGE ET UN MOUVEMENT DE TAPOTEMENT DE PUISSANCE

(30) Priority: 20.11.2021 US 202163281657 P
(43) Date of publication of application: 25.09.2024
(73) Proprietor: Koninklijke Philips N.V., 5656 AG Eindhoven (NL)
(72) Inventor: AHLMAN, Dave, 5656 AG Eindhoven (NL); HALL, Scott E., 5656 AG Eindhoven (NL); STORCH, David Robert, 5656 AG Eindhoven (NL); LEE, Sungsoo, 5656 AG Eindhoven (NL); BENNING, Wolter F., 5656 AG Eindhoven (NL); ALBRIGHT, Ethan, 5656 AG Eindhoven (NL); MILLER, Kevin Arnold, 5656 AG Eindhoven (NL); WEICHSLER, Walter Julius, 5656 AG Eindhoven (NL); FOSTER, Regan Starkey, 5656 AG Eindhoven (NL)
(74) Representative: Philips Intellectual Property & Standards
(86) International application number: PCT/EP2022/081726
(87) International publication number: WO 2023/088824

(56) References cited:
- US-A1- 2006 255 665
- US-A1- 2010 132 139
- US-A1- 2013 025 080

## Description

### Field of the Disclosure

The present disclosure is directed generally to drivetrain assembles for power toothbrush devices and power toothbrush devices having drivetrain assemblies having electromagnetic assemblies to drive a combination of controllable tapping motion and controllable sweeping motion.

### Background

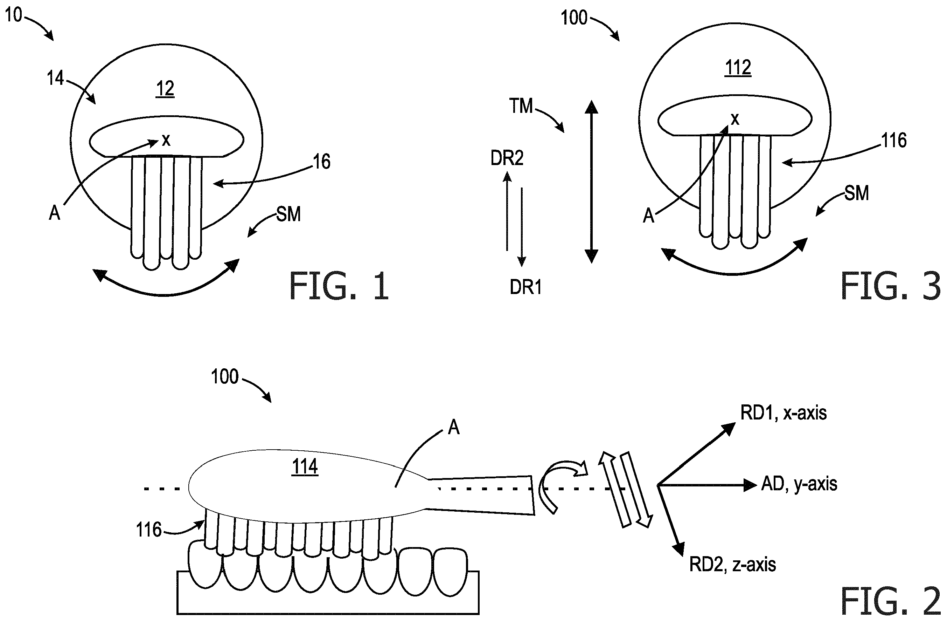

Current modern power toothbrush devices use rotary motion about a central axis of the brush head. This motion is known as a sweeping motion. A simplified schematic representation of a modern power toothbrush is shown in FIG. 1. As shown in FIG. 1, power toothbrush 10 has a handle 12 and a brush head 14. Bristles 16 are shown extending from brush head 14. In use, brush head 14 is driven by a drive system contained within handle 12. The bristles are typically rotated by the drive system about central axis A in a sweeping motion SM. The sweeping motion is typically embodied as movement that is linear, rotational, or a combination of both linear and rotational and the movement is tangential to the direction that the bristles are facing.

Unfortunately, the sweeping motion has some cleaning efficiency limitations. For example, the sweeping motion can remove a decent portion of plaque in interproximal zones (i.e., in between teeth), gumline areas, incisor surfaces, molar surfaces, and overall surface areas of the teeth, but residual plaque can remain post-brushing. Additionally, bristles can become trapped under heavy loads and cleaning efficiency suffers significantly in such scenarios. Current oral care products also do not have the ability to clean gum pockets where subgingival plaque is found. Current power toothbrush devices are also heavily dependent on precise user position, angle, and pressure.

Thus, there is a need in the art for improved low cost power toothbrush devices and systems that achieve stain and/or plaque removal and gum health objectives by precisely and controllably generating a vertical periodic motion that is parallel to the direction of the bristles in combination with the sweeping motion using electromagnetic assemblies.

US 2006/255665 A1 describes an electric motor for a small-scale electrical appliance, such as a toothbrush or shaver, including at least one oscillatory motor component.

US 2013/025080 A1 describes an oscillatory system for a motorized drive unit for the generation of a rotary oscillatory movement. The system includes a first oscillatory component.

US 2010/132139 A1 describes a toothbrush drive including a first drive component for generating a magnetic field and a second drive component driven in both a translational and rotational manner under the influence of the magnetic field.

### Summary of the Disclosure

The invention is as defined in the appended claims.

The present disclosure is directed generally to inventive drivetrain assemblies that can be applied to an electric or power personal care device, such as, an electric toothbrush or shaver. The inventive systems achieve improved stain and/or plaque removal and gum health objectives by precisely and controllably generating a power tapping motion in combination with a sweeping motion. The aforementioned limitations can be overcome by replacing or combining the sweeping motion with a vertical up and down periodic motion that can be generated and driven with a suitable drivetrain. While two separate mechanical systems can be coupled together to drive the tapping and sweeping motions, such a combination comes with drawbacks of cost, size, and complexity that prohibit competitiveness in the power toothbrush market. Various embodiments and implementations herein are directed to improved drivetrain assemblies that utilize an electromagnetic assembly to provide controllable power tapping motion either coupled with or decoupled from controllable sweeping motion. The improved drivetrain assemblies comprise a motor configured to periodically rotate a drivetrain shaft about a central axis of the device or along a line that is tangential to a brush head member and an electromagnetic assembly configured to drive the drivetrain shaft and the brush head member having bristles about a second axis of the device, different than the central axis, or in a direction parallel to a third axis of the device, that is different that the central axis. Applicant has recognized and appreciated that a drivetrain shaft can be independently controlled to produce sweeping and power tapping motions where the bristles rotate about a central axis of the device or along a line that is tangential to a brush head member and about an x-axis of the device or along a z-axis of the device. Applicant has further recognized and appreciated that electromagnetic assemblies can (i) be coupled with the motor to convert motion into a controllable power tapping motion or (ii) generate a controllable power tapping motion separately from the motion.

In one aspect, there is provided a drivetrain assembly for a power toothbrush device according to claim 1.

According to an embodiment, the first axis is a central axis of the power toothbrush device, the second axis is perpendicular to the central axis and the third axis, and the third axis is perpendicular to the central axis and the second axis.

According to an embodiment, the bearing comprises a moveable support member surrounding the drivetrain shaft and parallel flexible flexures extending between the moveable support and the base, wherein the parallel flexible flexures constrain the movement of the brush head member in the direction parallel to the third axis.

According to an embodiment, the electromagnetic assembly comprises: a voice coil actuator secured to the drivetrain shaft and configured to generate periodic linear movement such that the drivetrain shaft is rotatable about the second axis of the power toothbrush device.

According to an embodiment, the body portion further comprises a pivot upon which the drivetrain shaft rotates.

According to an embodiment, the electromagnetic assembly comprises: a magnet coil separate from the motor and within the body portion.

According to an embodiment, the electromagnetic assembly further comprises a pivot or hinge arranged along the drivetrain shaft upon which the drivetrain shaft rotates such that the movement in the direction parallel to the third axis of the power toothbrush device is constrained.

According to an embodiment, the magnet coil comprises a linear solenoid actuator.

According to an embodiment, the pivot or hinge is located along the motor.

According to an embodiment, the pivot or hinge is located between the motor and the brush head member.

According to an embodiment, the motor comprises a first side and a second side opposite the first side, wherein the brush head member is positioned on the first side of the motor, and wherein the pivot or hinge is located on the second side of the motor.

In another aspect, there is provided a power toothbrush device according to claim 12.

According to an embodiment, the first axis is a central axis of the power toothbrush device, the second axis is perpendicular to the central axis and the third axis, and the third axis is perpendicular to the central axis and the second axis.

According to an embodiment, the electromagnetic assembly comprises a stator, a voice coil actuator, or a linear solenoid actuator.

In various implementations, a processor or controller may be associated with one or more storage media (generically referred to herein as "memory," e.g., volatile, and non-volatile computer memory such as RAM, PROM, EPROM, and EEPROM, floppy disks, compact disks, optical disks, magnetic tape, etc.). In some implementations, the storage media may be encoded with one or more programs that, when executed on one or more processors and/or controllers, perform at least some of the functions discussed herein. Various storage media may be fixed within a processor or controller or may be transportable, such that the one or more programs stored thereon can be loaded into a processor or controller so as to implement various aspects as discussed herein. The terms "program" or "computer program" are used herein in a generic sense to refer to any type of computer code (e.g., software or microcode) that can be employed to program one or more processors or controllers.

It should be appreciated that all combinations of the foregoing concepts and additional concepts discussed in greater detail below (provided such concepts are not mutually inconsistent) are contemplated as being part of the inventive subject matter disclosed herein. In particular, all combinations of claimed subject matter appearing at the end of this disclosure are contemplated as being part of the inventive subject matter disclosed herein.

These and other aspects of the various embodiments will be apparent from and elucidated with reference to the embodiment(s) described hereinafter.

### Brief Description of the Drawings

In the drawings, like reference characters generally refer to the same parts throughout the different views. Also, the drawings are not necessarily to scale, emphasis instead generally being placed upon illustrating the principles of the various embodiments.

In the drawings, like reference characters generally refer to the same parts throughout the different views. Also, the drawings are not necessarily to scale, emphasis instead generally being placed upon illustrating the principles of the various embodiments.
FIG. 1 is a simplified schematic representation of an end view of a modern power toothbrush device employing a sweeping motion.
FIG. 2 is a simplified schematic representation of a portion of a power toothbrush device, according to aspects of the present disclosure.
FIG. 3 is a simplified schematic representation of an end view of a power toothbrush device configured to employ sweeping and tapping motions, according to aspects of the present disclosure.
FIG. 4 is a schematic representation of a power toothbrush device, according to aspects of the present disclosure.
FIG. 5 is a schematic representation of a drivetrain assembly of a power toothbrush device, according to aspects of the present disclosure.
FIG. 6 is a schematic representation of a drivetrain assembly of a power toothbrush device, according to aspects of the present disclosure.
FIG. 7 is a schematic representation of a drivetrain assembly of a power toothbrush device, according to aspects of the present disclosure.
FIG. 8 is a schematic representation of a portion of a drivetrain assembly of a power toothbrush device, according to aspects of the present disclosure.
FIG. 9 is a schematic representation of a portion of a drivetrain assembly of a power toothbrush device, according to aspects of the present disclosure.
FIG. 10 is a schematic representation of a drivetrain assembly of a power toothbrush device, according to aspects of the present disclosure.
FIG. 11 is a schematic representation of a drivetrain assembly of a power toothbrush device, according to aspects of the present disclosure.
FIG. 12A shows an elevational side view of a schematic representation of the electromagnetic assembly of FIG. 10 in isolation, according to aspects of the present disclosure.
FIG. 12B shows the electromagnetic assembly of FIG. 12A rotated 90 degrees, according to aspects of the present disclosure.
FIG. 13 is a schematic representation of a portion of a drivetrain assembly of a power toothbrush device, according to aspects of the present disclosure.
FIG. 14 is a schematic representation of a portion of a drivetrain assembly of a power toothbrush device, according to aspects of the present disclosure.
FIG. 15 is a schematic representation of a portion of a drivetrain assembly of a power toothbrush device, according to aspects of the present disclosure.
FIG. 16 is a simplified schematic representation of an end view of a drivetrain assembly of a power toothbrush device, according to aspects of the present disclosure.
FIG. 17 is a schematic graphical representation of a bristle path following a pure tapping motion, according to aspects of the present disclosure.
FIG. 18 is a schematic graphical representation of a bristle path following a controlled tapping motion and a controlled sweeping motion, according to aspects of the present disclosure.
FIG. 19A is a schematic graphical representation of a bristle path following a controlled tapping motion and a controlled sweeping motion, according to aspects of the present disclosure.
FIG. 19B is a schematic graphical representation of a bristle path following a controlled tapping motion and a controlled sweeping motion, according to aspects of the present disclosure.
FIG. 19C is a schematic graphical representation of a bristle path following a controlled tapping motion and a controlled sweeping motion, according to aspects of the present disclosure.

### Detailed Description of Embodiments

The present disclosure describes various embodiments of improved systems for driving brush heads of electric or powered personal care devices, such as, electric toothbrushes or shavers and the like. Applicant has recognized and appreciated that personal care devices can provide improved cleansing performance at critical areas by driving the bristles of the device in a vertical periodic motion that is parallel to the direction of the bristles where the amplitude of the vertical motion is equal to or greater than 0.25 mm (referred to herein as "power tapping"). As used herein, the term "vertical" does not mean an absolute direction with respect to the ground, but instead is used to indicate a relative direction of movement illustrated in the Figures. As described herein, the inventive power tapping motion within power toothbrush devices: (i) achieves deeper reach in gum pockets to remove subgingival plaque, (ii) achieves higher peak forces at surfaces which improve plaque and/or stain removal, (iii) prevents pinning of bristle tufts which improves plaque removal by restoring beneficial tuft sweeping behavior, (iv) achieves more resilience to variables of use like toothbrush placement, toothbrush angle, and toothbrush pressure, and (v) provides new options for experiential modes for the consumer. Accordingly, the improved systems described or otherwise envisioned herein provide a power toothbrush device with a drivetrain assembly that precisely controls the power tapping motion either coupled with or decoupled from precisely controlled sweeping movements. The improved drivetrain assemblies comprise a motor configured to periodically rotate a drivetrain shaft about a central axis of the device and an electromagnetic assembly configured to drive the drivetrain shaft and a brush head member having bristles about a second axis of the device, different than the central axis, or in a direction parallel to an axis of the device, that is different that the central axis.

A particular goal of utilization of the embodiments and implementations herein is to provide a mechanism to provide a power tapping motion in combination with a sweeping motion in a power toothbrush device like, e.g., a Philips Sonicare^{™} electric toothbrush (manufactured by Koninklijke Philips N.V.). However, the components of the device may be utilized with many other personal care devices, including oral care devices, oral cleaning devices, flossers, skin cleaners, and many other devices. This disclosure should not be limited by the specific embodiments depicted and described.

As shown in FIG. 2, a simplified schematic representation of a portion of a power toothbrush device 100 configured to generate a sweeping motion and/or a tapping motion is provided. Power toothbrush device 100 comprises brush head 114 and bristles 116 which can be driven to rotate about central axis A and pulse or tap in direction RD2. The directions provided in FIG. 2 are included to demonstrate the spatial terminology used in the art and the present application. As used herein, the term "vertical" means the direction indicated. Axial direction AD is parallel to central axis A and extends along a y-axis of the device 100. Radial direction RD1 is orthogonal to central axis A and radial direction RD2 and extends along an x-axis of the oral care device 100. Radial direction RD2 is orthogonal to both axial direction AD and radial direction RD1, parallel to the axes of the cleaning elements 116 depicted, and extends along a z-axis of the oral care device 100. The power tapping motion described herein refers to controllable movement of the brush head and/or bristles in radial direction RD2. In other words, the power tapping motion refers to motion of the bristles that is parallel to an axis of alignment of the bristles or normal (i.e., perpendicular) to the brush head member. The sweeping motion refers to rotary and/or linear motion of the bristles that is perpendicular to the axis of alignment of the bristles. In embodiments, the power tapping motion refers to controllable movement of the brush head and/or bristles in radial direction RD2 by rotating the drivetrain shaft about an axis extending in radial direction RD1 (i.e., about an x-axis of the device).

Referring to FIG. 3, a schematic representation of an end view of power toothbrush device 100 is provided. The drivetrain assemblies described herein are configured to generate a variety of motions comprising the sweeping and/or tapping motions for optimizing motion to a specific region that a particular motion is most beneficial for. In some cases, the particular motion comprises either the sweeping motion alone or the tapping motion alone. In other cases, the particular motion comprises a combination of the sweeping motion and the tapping motion. The combination of motions can be considered a summation (i.e., a cumulative act, motion, or effect) of sweeps or strokes and pulses or taps. The sweeps or strokes are directed in direction SM, (which would be in a direction between occlusal surfaces, i.e., biting surfaces, and the gumline when the toothbrush is held with bristle tips pointing toward a buccal side of the teeth). The pulses or taps are directed in the vertical direction TM (which would be a lingual to facial direction when the toothbrush is held with the bristle tips pointing toward a buccal side of the teeth). As used herein, the tapping motion is defined as vertical periodic movement (i.e., direction TM) that is equal to or greater than 0.25 mm in amplitude. In embodiments, a small power tapping motion (i.e., a tapping motion with an amplitude on the smaller side of the critical range described herein) can be used with the sweeping motion for the buccal anterior region of the mouth. In other embodiments, a large power tapping motion (i.e., a tapping motion with higher amplitudes of the critical range described herein) can be used with the sweeping motion to achieve better reach at interproximal regions in-between teeth.

The term frequency refers to a number of cycles for a given time interval, e.g., a second. The term amplitude refers to a peak amplitude which can comprise a maximum absolute value of a signal in embodiments. In embodiments, the desired range of amplitudes for the power tapping motion is from around ±0.25 mm to around ±3 mm, the power tapping motion generally comprises a periodical vertical motion equal to or greater than ±0.5 mm. Amplitudes that are higher than ±3 mm are not desired due to a risk of tooth chatter, where the platen of the toothbrush device can impact the occlusal surfaces of the opposing jaw. Additionally, amplitudes that are higher than ±3 mm can cause undesired vibration of oral and nasal tissues, as well as an unpleasant sensation on the treated surfaces. Frequencies that are lower than 0.25 Hz would be too slow to be efficacious. Frequencies that are higher than 520 Hz would be over double the primary resonant frequency and are not desirable.

It should be appreciated that a recommended oral care routine lasts for 2 minutes and, when considering an average of 32 teeth, there is approximately 3.75 seconds per tooth available during the recommended oral care routine. Thus, if the incidence of the power tapping motion is slower than 4 seconds, then it is too slow to be applied uniformly throughout the mouth (i.e., at every interproximal spot). Accordingly, in preferred embodiments, the incidence of the power tapping motion occurs at least every 3.75 seconds (i.e., a frequency of approximately 0.27 Hz). In embodiments, the minimal frequency may be approximately 2 Hz (i.e., at least every 0.5 seconds). In further embodiments, in order for a user to experience the power tapping motion uniformly throughout the mouth (i.e., at every interproximal spot and/or at each tooth), the power tapping motion can occur multiple times during each pass over a single tooth. Thus, the requisite frequency would be approximately 20 Hz (i.e., at least every 0.05 seconds). Of course, if an oral care routine is shorter than or longer than 2 minutes, it should be appreciated that the incidence of the power tapping motion may be adjusted accordingly so that the incidence of the power tapping motion occurs uniformly throughout the oral care routine. In other embodiments, it should be appreciated that it may be desired to have the incidence of the power tapping motion occur inconsistently or nonuniformly due to an analysis of particular areas where the tapping motion is more beneficial than other areas, for example.

In example embodiments, the sweeping motion is combined with the tapping motion having an amplitude of 0.25 mm and, the addition of the tapping motion can generate a 1% improvement in the gumline areas, a 3% improvement in the interdental areas, and a 1% overall improvement in cleaning performance considering coverage of all surfaces to be cleaned.

The tapping motion improves the performance of the sweeping motion, in part, by untrapping or unpinning the bristle tufts. Bristle trapping or pinning is a phenomena where, under heavy loads, the bristles can become constrained or trapped such that they no longer freely move according to the sweeping motion delivered by the drivetrain. When the user applies too much load when brushing, the bristle tufts can become partially constrained in their movement on the surface of the teeth. As a result of the constraint, the sweeping motion is reduced and the cleaning performance can suffer. When the user applies even more load, the bristle tufts can become trapped or pinned where the tufts do not move at all when brushing. As a result of the trapped or pinned bristles, there is no sweeping motion and the user derives no benefit from the sweeping motion from the drivetrain assembly. When bristles are constrained or trapped, the cleaning benefits only resume when the user manually moves the product to a new orientation and frees the bristles from the heavy loads.

The sweeping motion performs best when the bristles touch the surface of the tooth and can move freely along large surface areas without being constrained. When brushing with sweeping and tapping motions together, the bristle tufts splay out as the load increases or as the brush head moves in direction DR1 due to the drivetrain assembly generating the vertical up-down movement (i.e., the power tapping motion). As the load increases due to the force exerted from the drivetrain assembly or otherwise due to user applied load for example, the tufts can become more and more constrained. However, if the amplitude of the brush head movement in direction DR1 is large enough, the large amplitude movement can cause buckling of a constrained or trapped bristle and effectively release or unload the bristle. Thus, the addition of the tapping motion of a sufficiently large amplitude to the sweeping motion allows the bristles to move with more freedom, thereby improving cleaning performance.

Critically, when the brush head moves in direction DR2 during the periodic tapping motion, the behavior reverses and as the load decreases further, the tufts become less and less constrained. The tapping motion can allow the tufts to cover a larger surface area during the sweeping motion and improves plaque removal by restoring the beneficial sweeping motion.

The addition of the tapping motion to the sweeping motion also achieves a deeper reach into gum pockets to remove subgingival plaque. Within gum pockets, the addition of the tapping motion achieves improved cleaning performance on marginal areas, interproximal areas, mesial areas, and buccal areas, and an improved overall cleaning performance. In example embodiments, the deeper reach and improved cleaning performance is achieved under a 30 degree roll angle, a 45 degree roll angle, or a 60 degree roll angle, or any suitable roll angle. Thus, the addition of the tapping motion renders the cleaning efficiency of the brush to be more robust to user orientation, and less dependent on the user's technique, than using the sweeping motion alone.

The improved cleaning performance can be achieved by using the critical operating parameters for the tapping motion discussed herein. A variety of drivetrain assemblies can be implemented to generate the tapping motion, as discussed herein.

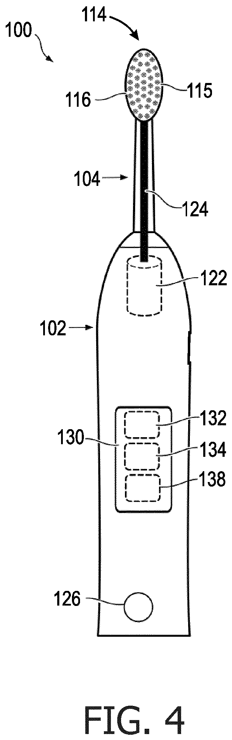

FIG. 4 shows an example power toothbrush device 100 including a body portion 102 with a housing and a brush head member 104 mounted on the body portion 102. Brush head member 104 includes at its end remote from the body portion 102 brush head 114. Brush head 114 includes bristle face 115, which provides a plurality of bristles 116. According to an embodiment, the bristles extend along an axis of alignment substantially perpendicular to the head's axis of elongation, although many other embodiments of the brush head and bristles are possible.

Head member 104, brush head 114, and/or bristle face 115 are mounted so as to be able to move relative to the body portion housing 102. The movement can be any of a variety of different movements, including vibrations or rotation, among others. According to one embodiment, head member 104 is mounted to the body portion housing 102 so as to be able to vibrate relative to body portion housing 102, or, as another example, brush head 114 is mounted to head member 104 so as to be able to vibrate relative to body portion housing 102, or, as another example, bristle face 115 is mounted to head member 104 so as to be able to vibrate relative to body portion housing 102. The head member 104 can be fixedly mounted onto body portion housing 102, or it may alternatively be detachably mounted so that head member 104 can be replaced with a new one when the bristles or another component of the device are worn out and require replacement.

The body portion includes a drivetrain assembly 122 with a motor for generating movement and a transmission component 124, or shaft, for transmitting the generated movements to brush head member 104. For example, drivetrain assembly 122 comprises a motor or electromagnet(s) that generates movement of drivetrain shaft 124, which is subsequently transmitted to the brush head member 104. Drivetrain and motor 122 can include components such as a power supply, an oscillator, and one or more electromagnets, among other components. In this embodiment the power supply comprises one or more rechargeable batteries, not shown, which can, for example, be electrically charged in a charging holder in which power toothbrush device 100 is placed when not in use.

The body portion is further provided with a user input 126 to activate and de-activate movement generator or drivetrain assembly 122. The user input 126 allows a user to operate the toothbrush 100, for example, to turn the toothbrush 100 on and off. The user input 126 may, for example, be a button, touch screen, or switch.

The body portion of the device also comprises a controller 130. Controller 130 may be formed of one or multiple modules, and is configured to operate the power toothbrush device 100 in response to an input, such as input obtained via user input 126. Controller 130 can comprise, for example, a processor 132 and a memory 134, and can optionally include a connectivity module 138. The processor 132 may take any suitable form, including but not limited to a microcontroller, multiple microcontrollers, circuitry, a single processor, or plural processors. The memory 134 can take any suitable form, including a non-volatile memory and/or RAM. The non-volatile memory may include read only memory (ROM), a hard disk drive (HDD), or a solid state drive (SSD). The memory can store, among other things, an operating system. The RAM is used by the processor for the temporary storage of data. According to an embodiment, an operating system may contain code which, when executed by controller 130, controls operation of the hardware components of power toothbrush device 100. According to an embodiment, connectivity module 138 transmits collected sensor data, and can be any module, device, or means capable of transmitting a wired or wireless signal, including but not limited to a Wi-Fi, Bluetooth, near field communication, and/or cellular module.

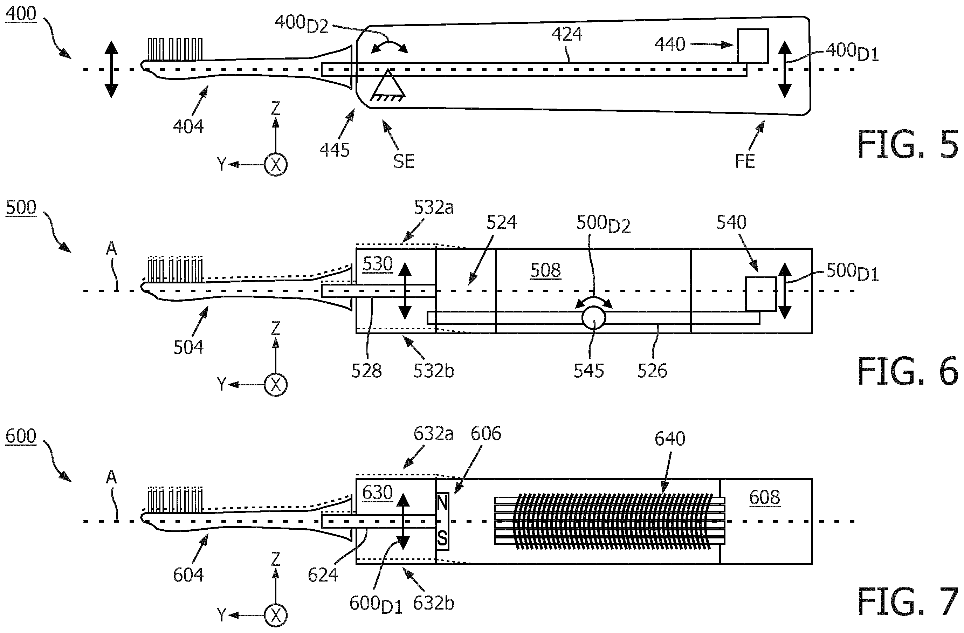

Referring to FIG. 5, in one embodiment, a schematic drivetrain assembly 400 of a power toothbrush device is provided. The drivetrain assembly 400 is configured to generate the power tapping motion by rotating driveshaft 424 about the x-axis or the axis along radial direction RD1. Drivetrain assembly 400 comprises brush head member 404, drivetrain shaft 424, and oscillating actuator 440. Brush head member 404 is akin to brush head member 104 and drivetrain shaft 424 is akin to shaft 124 described herein. Oscillating actuator 440 is configured to generate periodic linear movement in direction 400_{D1}. Drivetrain shaft 424 is configured to transmit the generated periodic linear movement from actuator 440 to brush head member 404. In embodiments, drivetrain assembly 400 further comprises pivot 445 upon which drivetrain shaft rotates in direction 400_{D2} about the x-axis of the power toothbrush device. In embodiments, pivot 445 is a flexure pivot that is attached to drivetrain shaft 424 at one end and grounded at the other end to the body of the power toothbrush device 400. Pivot 445 may be made of a sheet of spring steel or any other suitable alternatives. Using pivot 445, motion of drivetrain shaft 424 in direction 400_{D2} can be constrained to a substantially pure rotation about the x-axis.

In embodiments, the geometry of pivot 445 can be changed, or, in other embodiments, additional sheets of spring steel can be used. In embodiments, the position of pivot 445 is switched with the position of actuator 440 such that actuator 440 is proximate to brush head member 404 and pivot 445 is farther away from brush head member 404. In other words, instead of having actuator 440 at first end FE of power toothbrush device and pivot 445 at second end SE of the device (as shown in FIG. 4), actuator 440 can be situated at second end SE and pivot 445 can be positioned at first end FE. In such embodiments, drivetrain shaft 424 tends to move greater distances in direction 400_{D1} at second end SE and would thus require a larger seal at the second end SE.

Referring to FIG. 6, in another embodiment, a schematic drivetrain assembly 500 of a power toothbrush device is provided. Drivetrain assembly 500 is configured to generate the power tapping motion by moving, displacing, or translating driveshaft 524 in the z-axis direction or along the radial direction RD2. Drivetrain assembly 500 comprises brush head member 504, base 508, drivetrain shaft 524, body portion 530, and oscillating actuator 540. Brush head member 504 is akin to brush head members 104, 404 and drivetrain shaft 524 is akin to shafts 124, 424 described herein. Oscillating actuator 540, which is akin to actuator 440, is configured to generate periodic linear movement in direction 500_{D1}. Drivetrain shaft 524 comprises first section 526 and second section 528 in embodiments where each of first and second sections 526, 528 has a proximal end and a distal end, respectively. In the embodiment shown in FIG. 6, the proximal end of section 526 extends from base 508 and is coupled with actuator 540 and the distal end of the second section 528 is coupled with brush head member 504. First section 526 of shaft 524 is mounted to base 508, for example, at a mid-point of section 526, or any other suitable point. The distal end of first section 526 is coupled with the proximal end of second section 528 in portion 530 of device 500. Portion 530 of device can include parallel flexible flexures 532a, 532b extending from portion 530 to base 508.

In operation, actuator 540 moves section 526 periodically in direction 500_{D1} and section 526 rotates about pivot 545, or any other structural equivalent, in direction 500_{D2}. Pivot 545 is mounted or grounded to base 508 and the rotation of section 526 occurs about the x-axis of device 500. It should be appreciated that pivot 545 can be constructed similar to pivot 445 in alternate embodiments. The rotation of section 526 causes section 528 of shaft 524 to be translated back and forth between up and down positions. The translation is constrained by parallel flexible flexures 532a, 532b. As shown in FIG. 6, the down position is a default position where section 528 is coaxial with the central axis A of device 500. In the down position, parallel flexible flexures 532a, 532b are also in their default positions in line with the top and bottom surfaces of base 508. In other words, in the down or default position, parallel flexible flexures 532a, 532b are not flexed. When section 528 of shaft 524 is translated to the up position due to rotation of section 526 of shaft 524, parallel flexible flexures 532a, 532b are pushed up or flexed and thus, brush head member 524 is also translated or displaced in an upward direction. Thus, drivetrain assembly 500 is configured to generate the power tapping motion by moving, displacing, or translating section 528 of driveshaft 524 and brush head member 504 in the z-axis direction or along radial direction RD2. In embodiments, counterbalancing for vibration reduction may be required for device 500.

Referring to FIG. 7, in another embodiment, a schematic drivetrain assembly 600 of a power toothbrush device is provided. Like drivetrain assembly 500, drivetrain assembly 600 is configured to generate the power tapping motion by moving, displacing, or translating driveshaft 624 in the z-axis direction or along radial direction RD2. Drivetrain assembly 600 comprises brush head member 604, magnet 606, base 608, drivetrain shaft 624, body portion 630, and stator 640. Instead of providing an oscillating actuator and a rotatable or pivotable shaft, drivetrain assembly 600 includes magnet 606, attached indirectly or directly to brush head member 604 through shaft 624, and stator 640. Drivetrain shaft 624 is mounted to or otherwise coupled to body portion 630 and portion 630 includes parallel flexible flexures 632a, 632b that extend between portion 630 and base 608. Stator 640 is mounted to or grounded to base 608. Brush head member 604 is akin to brush head members 104, 404, 504, base 608 is akin to base 508, shaft 624 is akin to section 528 of shaft 524, and body portion 630 is akin to portion 530.

In operation, stator 640, which includes coil and laminations, is configured to generate magnetic fields suitable for interacting with the magnetic field of magnet 606 to periodically drive magnet 606 and thereby drivetrain shaft 624 and brush head member 604 back and forth in direction 600_{D1}.

Like drivetrain assembly 500, drivetrain assembly 600 also has a default or down position and a translated or up position. Driving magnet 606 pushes shaft 624, portion 630, and brush head member 604 between the up and down positions. The translation is constrained by parallel flexible flexures 632a, 632b. As shown in FIG. 7, the down position is a default position where shaft 624 is coaxial with the central axis A of device 600. In the down position, parallel flexible flexures 632a, 632b are also in their default positions in line with the top and bottom surfaces of base 608. The default positions of parallel flexible flexures 632a and 632b are shown with solid lines while the up or translated positions of parallel flexible flexures 632a and 632b are shown with dashed or broken lines. The same holds true for the default and translated positions for shaft 624 and brush head member 604 (and bristles). In the down or default position, parallel flexible flexures 632a, 632b are not flexed. Only when shaft 624 is translated to the up position due to the magnetic fields generated by stator 640, do parallel flexible flexures 632a, 632b become flexed and brush head member 604 thereby becomes translated or displaced in an upward direction. Thus, drivetrain assembly 600 is configured to generate the power tapping motion by moving, displacing, or translating driveshaft 624 and brush head member 604 in the z-axis direction or along radial direction RD2 using an electromagnetic assembly comprising a magnet 606 and stator 640.

It should be appreciated that in embodiments, drivetrain assemblies 400, 500, and 600 can be used for a power toothbrush device, or any device that generates high-speed vibrations, to generate pure or predominantly power tapping motion in the direction of the z-axis of the device. Such devices can include shavers and other skincare products. The assemblies described herein provide example mechanisms that can be used to operate consistently, quietly, reliably and controllably at frequencies up to 300 Hz and amplitudes up to 2 mm over the course of at least 5 years of daily use.

In alternate embodiments, assemblies 400, 500, and 600 can be used for a power toothbrush device that is configured to generate consistent and controllable power tapping motion in combination with controllable sweeping motion. In such alternate embodiments, assemblies 400, 500, and 600 can further comprise a motor mounted on the drivetrain shaft to periodically rotate the drivetrain shaft about central axis A of the devices. In such embodiments including the additional motor, assemblies 400, 500, and 600 can independently control the power tapping motion in the direction of the z-axis and the sweeping motion about the y-axis.

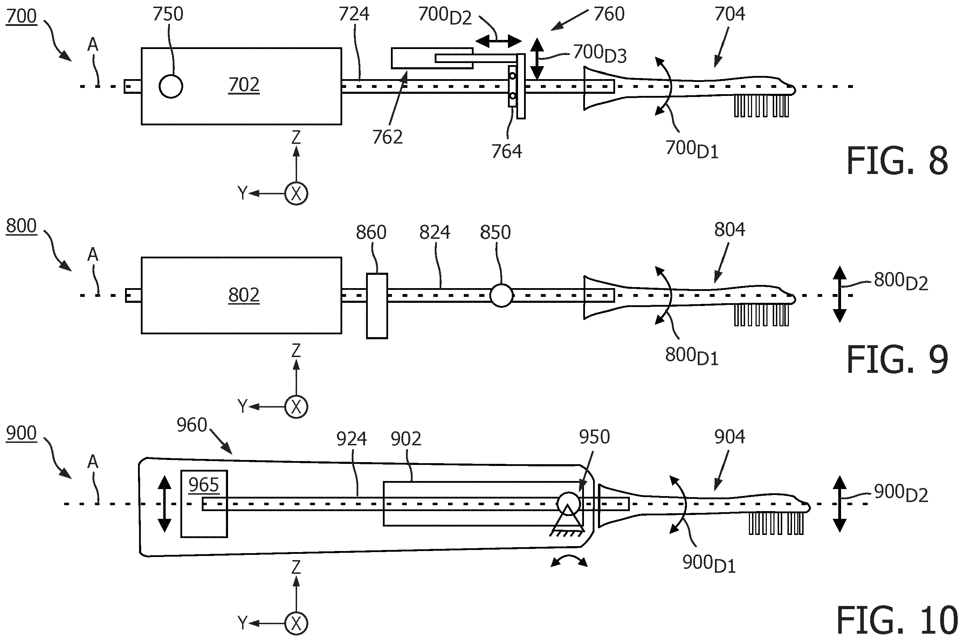

For example, referring to FIG. 8, an embodiment of a schematic drivetrain assembly 700 of a power toothbrush is provided. Drivetrain assembly 700 comprises a motor 702 to periodically rotate the drivetrain shaft 724 about central axis A in direction 700_{D1}. Motor 702 can be a can motor, any suitable DC or AC motor or driver, or any suitable actuator-resonator combinations that produce rotating motion to drive rotation of the driveshaft in direction 700_{D1}. To independently and controllably generate the power tapping motion, assembly 700 further comprises a hinge 750, upon which motor 702 can rotate, and electromagnetic assembly 760. To move brush head member 704 in a direction parallel to the z-axis of the device 700, electromagnetic assembly 760 comprises linear solenoid actuator 762 and bearing 764 in an embodiment. Solenoid actuator 762 comprises an electrical coil wound around a cylindrical tube with a ferro-magnetic actuator or piston that is moveable or slidable within the body of the coil in direction 700_{D2}. Due to the presence of hinge 750 and the connection of linear solenoid actuator 762 to bearing 764, which can freely rotate about shaft 724, movement of the piston or actuator of actuator 762 in direction 700_{D2} to the right in FIG. 8, causes movement, displacement, or translation of drivetrain shaft 724 in direction 700_{D3} which is perpendicular to direction 700_{D2}. In operation, when electrical current is applied to the coil(s) of linear solenoid actuator 762, the coil(s) behave like an electromagnet or a permanent magnet and the actuator or piston inside the coil can be pushed or pulled in the desired direction depending on the configuration. In the configuration shown in FIG. 8, the actuator 762 is pushed to the right and actuator 762 can include a return spring or other suitable resilient member so that the motion can be repeated periodically. Although FIG. 8 shows hinge 750 located along motor 702, it should be appreciated that hinge 750 can alternatively be located behind motor 702 along driveshaft 724 (i.e., on a first side of the motor 702) or between motor 702 and brush head member 704 (i.e., on a second side of the motor 702, opposite the first side).

Referring to FIG. 9, in another embodiment, a schematic drivetrain assembly 800 of a power toothbrush is provided. Like assembly 700, drivetrain assembly 800 comprises motor 802 to periodically rotate the drivetrain shaft 824 about central axis A in direction 800_{D1}. Motor 802 can be a can motor, any suitable DC or AC motor or driver, or any suitable actuator-resonator combinations that produce rotating motion to drive rotation of the driveshaft in direction 800_{D1}. To independently and controllably generate the power tapping motion, assembly 800 further comprises a hinge or pivot 850, upon which motor 802 can rotate, and eccentric mass 860. To move brush head member 804 in direction 800_{D2}, parallel to the z-axis of the device 800, eccentric mass 860 is mounted on or otherwise coupled with drivetrain shaft 824. When motor 802 rotates drivetrain shaft 824, eccentric mass 860 rotates as well. Since eccentric mass 860 is offset on drivetrain shaft 824, the rotation of eccentric mass 860 causes an asymmetrical centripetal force which results in a net centrifugal force on motor 802. Due to the presence of hinge or pivot 850 and the centrifugal force on motor 802, drivetrain shaft 824 can be moved, displaced, or translated in direction 800_{D2} which is parallel to the z-axis of the power toothbrush device 800. Although FIG. 9 shows hinge 850 located between motor 802 and brush head member 804 (i.e., on a first side of motor 802), it should be appreciated that hinge 850 can alternatively be located behind motor 802 along driveshaft 824 (i.e., on a second side of motor 802, opposite the first side), or along motor 802 (e.g., similar to how hinge 750 is located along motor 702).

Referring to FIG. 10, in another embodiment, a schematic drivetrain assembly 900 of a power toothbrush is provided. Like assemblies 700 and 800, drivetrain assembly 900 comprises motor 902 to periodically rotate the drivetrain shaft 924 about central axis A in direction 900_{D1}. Motor 902 can be a can motor, any suitable DC or AC motor or driver, or any suitable actuator-resonator combinations that produce rotating motion to drive rotation of the driveshaft in direction 800_{D1}. To independently and controllably generate the power tapping motion, assembly 900 further comprises a hinge 950, upon which motor 902 can rotate, and electromagnetic assembly 960. To move brush head member 904 in a direction 900_{D2}, parallel to the z-axis of the device 900, electromagnetic assembly 960 comprises voice coil actuator 965 in an embodiment. Voice coil actuator 965 comprises a permanent magnetic field assembly having permanent magnets and ferrous steel, and a coil assembly. Actuator 965 can be configured to have a moving coil relative to a fixed permanent magnetic field assembly having a steel housing and a concentric permanent magnet assembly therein. Alternatively, actuator 965 can be configured to have a fixed housing with a cylindrical coil tube therein and a permanent magnetic field assembly having magnets that are movable relative to the coil. Due to the presence of hinge 950 and the periodic linear motion generated by actuator 965, drivetrain shaft 924 can be moved, displaced, or translated in direction 900_{D2} which is parallel to the z-axis of the power toothbrush device 900. The tapping and sweeping motions may each be varied in intensity and frequency from zero to full power. Although FIG. 10 shows hinge 950 positioned along motor 902, it should be appreciated that hinge can alternatively be located between motor 902 and electromagnetic assembly 960 (i.e., on a first side of the motor), or between motor 902 and brush head member 904 (i.e., on a second side of the motor 902, opposite the first side).

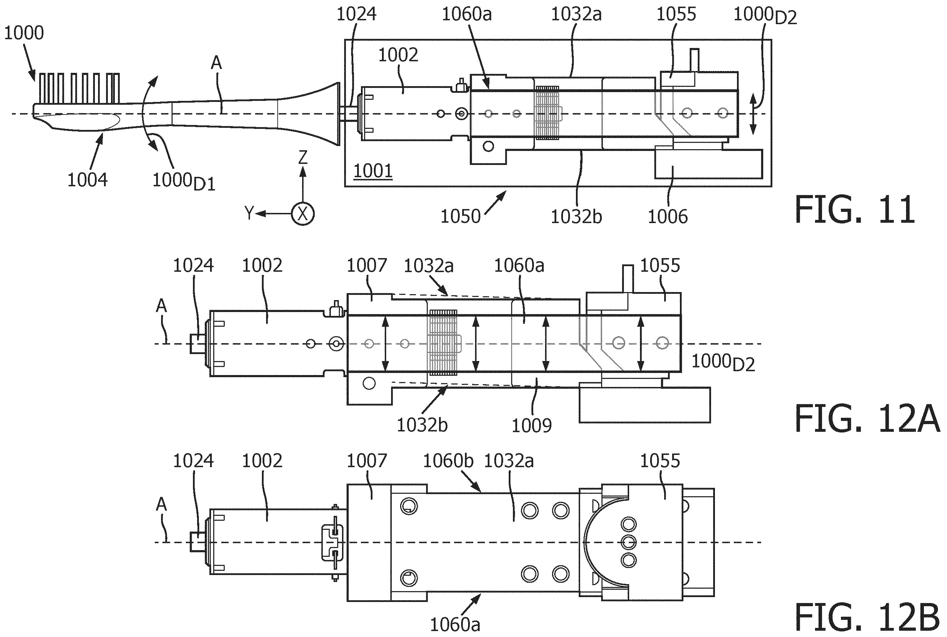

Referring to FIG. 11, in another embodiment, a schematic drivetrain assembly 1000 of a power toothbrush device is provided. Like drivetrain assemblies 700, 800, 900, drivetrain assembly 1000 comprises motor 1002 to periodically rotate drivetrain shaft 1024 about central axis A in direction 1000_{D1} and electromagnetic assembly 1050 to independently and controllably generate the power tapping motion. Such power tapping motion is achieved by moving, displacing, or translating drivetrain shaft 1024 in the z-axis direction or along radial direction RD2 as explained herein. Drivetrain assembly 1000 comprises body portion 1001, motor 1002, brush head member 1004, frame 1006, drivetrain shaft 1024, and electromagnetic assembly 1050. Body portion 1001 is akin to body portion 102 discussed above. Drivetrain shaft 1024, which is akin to other drivetrain shafts discussed above, is at least partially contained within body portion 1001 and configured to engage brush head member 1004. Motor 1002 is mounted on drivetrain shaft 1024 and configured to periodically drive drivetrain shaft 1024 and thereby brush head member 1004 about central axis A of the device in direction 1000_{D1}. Frame 1006 grounds drivetrain assembly 1000 to body portion 1001 of a power toothbrush device or any suitable self-care device. Electromagnetic assembly 1050 comprises actuator 1055 to periodically drive the drivetrain shaft 1024 and thereby brush head member 1004 in a different direction, namely, in direction 1000_{D2} which is parallel to the z-axis of the device. Similar to assemblies 500 and 600, assembly 1000 includes parallel flexible flexures 1032a and 1032b to constrain the movement of shaft 1024 in nearly purely direction 1000_{D2}. Flexures 1032a and 1032b can be made of spring steel sheeting material or any suitable alternatives as long as they can flex or bend appropriately. The flexures are additionally dimensioned such that the resonant frequency is well below 100 Hz because assembly 1000 is not intended to operate in resonance.

FIG. 12A shows an elevational side view of electromagnetic assembly 1050 in isolation. FIG. 12B shows another elevational side view of the electromagnetic assembly of FIG. 12A rotated 90 degrees. Motor 1002, which produces pure rotation, is mounted on drivetrain shaft 1024 and connected to frame 1006 by clamping or any suitable alternative means for securing the motor. Motor 1002 can be embodied as a Bourdon motor or any suitable alternative. In the embodiment depicted in FIGS. 11, 12A, and 12B, frame 1006 comprises at least two parts 1007 and 1009 that are connected by parallel flexible flexures 1032a and 1032b and parallel substantially rigid translation linkages 1060a and 1060b. Flexible flexure 1032a is arranged 180 degrees from flexible flexure 1032b around central axis A. Rigid translation linkage 1060a is arranged 180 degrees from rigid translation linkage 1060b around central axis A. Parallel flexible flexures 1032a and 1032b are arranged perpendicular to parallel rigid translation linkages 1060a and 1060b. In FIG. 12A, only rigid translation linkage 1060a is visible since rigid translation linkage 1060b is arranged in parallel with linkage 1060a and on the other side of central axis A and assembly 1000. In FIG. 12B, only flexible flexure 1032a is visible since flexible flexure 1032b is arranged in parallel with flexure 1032a and on the other side of central axis A and assembly 1000. Although a single pair of flexures and a single pair of linkages are depicted in FIGS. 11, 12A, and 12B, it should be understood that additional pairs are contemplated, and any number of flexures and/or linkages for that matter. At least part of the space between part 1007 and part 1009 of frame 1006 along axis A is open, i.e., not filled with any components, as shown in FIGS. 11 and 12A.

Part 1007 of frame 1006 is movable relative to part 1009 of frame 1006 in direction 1000_{D2} due to movement imparted from actuator 1055. In embodiments, actuator 1055 is a voice coil or any suitable alternative grounded to frame 1006. Actuator 1055 can generate oscillating vertical motion in direction 1000_{D2}. Part 1009 of frame 1006 is grounded to body portion 1001. The grounding provided by part 1009 of frame 1006 also provides additional damping for actuator 1055. A first end of each of parallel flexible flexures 1032a and 1032b is connected to part 1007 of frame 1006 and a second end of each of parallel flexible flexures 1032a and 1032b is connected to part 1009 of frame 1006. Specifically, a first end of parallel flexible flexure 1032a is fixed to a top surface of part 1007 of frame 1006 and a first end of parallel flexible flexure 1032b is fixed to a bottom surface of part 1007 of frame 1006. The second end of parallel flexible flexure 1032a is fixed to a top surface of part 1009 of frame 1006 and a second end of parallel flexible flexure 1032b is fixed to a bottom surface of part 1009 of frame 1006. The oscillating vertical motion generated by actuator 1055, and conveyed by linkages 1060a and 1060b to part 1007, is constrained by parallel flexible flexures 1032a and 1032b in direction 1000_{D2}. The rigid translation linkages can also be made of spring steel sheeting material or any suitable alternatives as long as the linkages do not flex or bend. In embodiments, another mass, a counterweight with inverted motion, or voice coil can be attached to assembly 1000 to provide vibration cancellation.

With reference to FIG. 12A, the down position is a default position where part 1007 of frame 1006 is not flexed relative to central axis A. In the down position, the top surface of part 1007 is aligned with the top surface of part 1009. Similarly, in the down position, the bottom surface of part 1007 is aligned with the bottom surface of part 1009. Flexible flexure 1032a is parallel with flexible flexure 1032b and, both parallel flexible flexures 1032a and 1032b are parallel with central axis A in the down or default position. The default positions of parallel flexible flexure 1032a and 1032b are shown with solid lines. Actuator 1055 is configured to move in direction 1000_{D2} and, since actuator 1055 is grounded by part 1009 of frame 1006, the movement of actuator 1055 in direction 1000_{D2} is transferred by rigid translation linkages 1060a and 1060b to part 1007 of frame 1006 in the same direction, namely, direction 1000_{D2}. The orientation of the linkages 1060a and 1060b provides high rigidity in the transfer of motion from actuator 1055 to part 1007 of frame 1006. The movement of part 1007 in direction 1000_{D2} is allowed by a flexing of parallel flexible flexures 1032a and 1032b to an up position. The up or translated positions of parallel flexible flexures 1032a and 1032b are shown with dashed or broken lines. Although not shown in FIG. 12A, when part 1007 is translated, motor 1024 and drivetrain shaft 1024 are also translated or displaced in direction 1000_{D2}. Assembly 1000 advantageously enables independent adjustment of the oscillating sweeping motion about the central axis A and the oscillating tapping motion in the z-axis direction or along radial direction RD2 to generate a variety of motions.

In additional embodiments, the sweeping motion and the tapping motion can be coupled together and imparted by a single actuator instead of having one actuator configured to generate the rotational motion and a separate additional actuator, e.g., actuator 1055, configured to generate the pushing and pulling motions in the tapping direction.

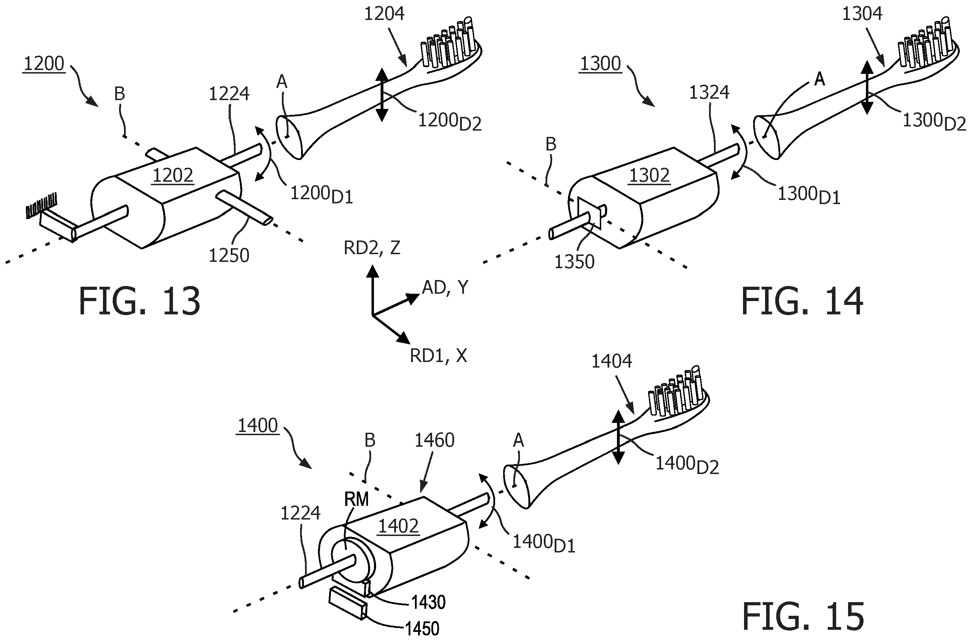

Referring to FIG. 13, in another embodiment, a schematic drivetrain assembly 1200 of a power toothbrush device is provided. Like assemblies 700, 800, and 900, drivetrain assembly 1200 comprises a motor 1202 to periodically rotate drivetrain shaft 1224 about central axis A in direction 1200_{D1}. Motor 1202 can be a sensonic drive, can motor, any suitable DC or AC motor or driver, or any suitable actuator-resonator combinations that produce rotating motion to drive rotation of the driveshaft in direction 1200_{D1}. The motor 1202 itself can also independently and controllably generate the power tapping motion and, in such case, the tapping motion is inherently coupled to the rotation. As shown in FIG. 13, motor 1202 can generate or provide the forces needed to drive the tapping motion in direction 1200_{D2}, parallel to the z-axis of the device (i.e., in direction RD2). Such initial mechanical motion can be converted to a tapping motion in direction 1200_{D2} by any suitable means where needed, for example, by adding an eccentric mass, a truss or spring, a cam, or some combination. To realize the tapping motion, the degree of freedom must be provided for rotation about the x-axis of the device. Pivot 1250, or any other suitable alternative, can be provided to realize the tapping motion and, such pivot may be located anywhere coincident with the central axis A of the device, either in the domain of the toothbrush or located at a theoretical infinite distance from the brush (i.e., near perfect translation). Pivot 1250 can be embodied as a point, pin, shaft, or any suitable alternative on which motor 1202 can rotate, turn, or oscillate about axis B.

Referring to FIG. 14, in another embodiment, a schematic drivetrain assembly 1300 of a power toothbrush device is provided. Like assemblies 700, 800, 900, and 1200, drivetrain assembly 1300 comprises a motor 1302 to periodically rotate drivetrain shaft 1324 about central axis A in direction 1300_{D1}. Motor 1302 can be a sensonic drive, can motor, any suitable DC or AC motor or driver, or any suitable actuator-resonator combinations that produce rotating motion to drive rotation of the driveshaft in direction 1300_{D1}. The motor 1302 itself can also independently and controllably generate the power tapping motion and, in such case, the tapping motion is inherently coupled to the rotation. As shown in FIG. 14, motor 1302 can generate or provide the forces needed to drive the tapping motion in direction 1300_{D2}, parallel to the z-axis of the device (i.e., in direction RD2). Such initial mechanical motion can be converted to a tapping motion in direction 130O_{D2} by any suitable means where needed, for example, by adding an eccentric mass, a truss or spring, a cam, or some combination. To realize the tapping motion, the degree of freedom must be provided for rotation about the x-axis of the device. Pivot 1350, or any other suitable alternatives, can be provided to realize the tapping motion and, such pivot may be located anywhere coincident with the central axis A of the device, either in the domain of the toothbrush or located at a theoretical infinite distance from the brush (i.e., near perfect translation). Pivot 1350 can be embodied as a point, pin, shaft, or any suitable alternative on which motor 1302 can rotate, turn, or oscillate. As shown in FIG. 14, pivot 1350 can be located behind motor 1302 (i.e., on a side of motor 1302 that is opposite brush head 1304).

Referring to FIG. 15, in another embodiment, a schematic drivetrain assembly 1400 of a power toothbrush device is provided. Like assemblies 700, 800, 900, 1200, and 1300, drivetrain assembly 1400 comprises motor 1402 to periodically rotate drivetrain shaft 1424 about central axis A in direction 1400_{D1}. Motor 1402 can be a sensonic drive, can motor, any suitable DC or AC motor or driver, or any suitable actuator-resonator combinations that produce rotating motion to drive rotation of the driveshaft in direction 1400_{D1}. Instead of imparting the power tapping motion independently and controllably from the motor itself as shown in FIG. 13, motor 1402 can generate or provide the forces needed to drive the tapping motion in direction 1400_{D2}, parallel to the z-axis of the device (i.e., in direction RD2) by adding an eccentric mass, a truss or spring, a cam, or some combination. In FIG. 15, the forces needed to drive the tapping motion in direction 1400_{D2} can be imparted by one or more additional stationary permanent magnets configured to interact with the magnets of motor 1402. In alternate embodiments, an additional rotor carrying one or more permanent magnets can be used instead of the one or more stationary permanent magnets depicted in FIG. 15. As shown in FIG. 15, a permanent magnet 1430 can be secured, or otherwise connected, to a rotating mass RM on drivetrain shaft 1424. The rotating mass RM can be integral with or indirectly connected to motor 1402. A stationary permanent magnet 1450 can be mounted within the body portion of the power toothbrush device such that it interacts with magnet 1430 as it rotates about central axis A. In on embodiment, stationary magnet 1450 can be oriented within the body portion of the power toothbrush device such that its north pole faces upward toward the central axis A and its south pole faces downward. Rotatable magnet 1430 can be oriented with its south pole facing shaft 1424 and its north pole facing outward (i.e., away from drivetrain shaft 1424 as it rotates about the shaft). To realize the tapping motion, the degree of freedom must be provided for rotation about the x-axis of the device. Pivot line 1460, or any other suitable alternative, can be provided to realize the tapping motion and, such pivot may be located anywhere coincident with the central axis A of the device, either in the domain of the toothbrush or located at a theoretical infinite distance from the brush (i.e., near perfect translation). Pivot 1460 can be embodied as a point, pin, shaft, or any suitable alternative on which motor 1402 can rotate, turn, or oscillate. As shown in FIG. 14, pivot 1460 can be located between motor 1402 and brush head member 1404 (i.e., on a first side of motor 1402). In alternate embodiments, pivot 1460 can be located along motor 1402 or behind motor 1402 (i.e., on a second side of motor 1402, opposite the first side).

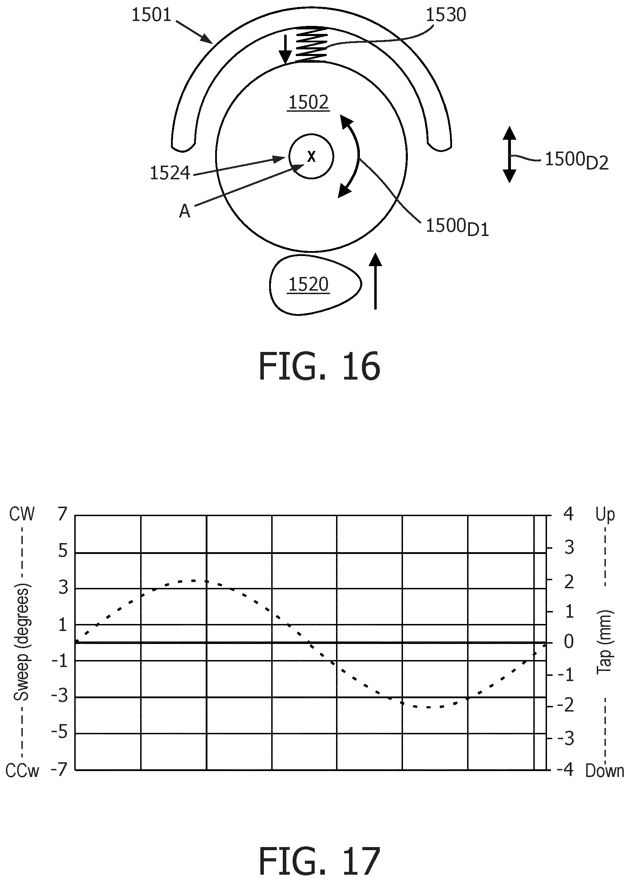

All of drivetrain assemblies 1200, 1300, and 1400 include a tapping return load (i.e., reciprocating forces) to generate the back stroke of the tapping motion. In embodiments, the return load can be generated from the motor 1202, 1302, or 1402 itself and/or the motion conversion element being bi-directional. In alternate embodiments where the motor and motion conversion element are both uni-directional and/or require an additional amount of return load or reciprocating force, the return load can be provided by a return spring or any suitable alternative. For example, FIG. 16 shows an end view of a motor 1502 of a drivetrain assembly configured to periodically rotate a drivetrain shaft 1524 about central axis A in direction 1500_{D1}. Motor 1502 can be a sensonic drive, can motor, any suitable DC or AC motor or driver, or any suitable actuator-resonator combinations that produce rotating motion to drive rotation of the driveshaft in direction 1500_{D1}. In embodiments including a rotatable cam 1520 as the motion converter, or any suitable equivalent, to generate or provide the forces needed to move drivetrain shaft 1524 in the tapping motion in direction 1500_{D2}, parallel to the z-axis of the device (i.e., in direction RD2), no reciprocating forces are provided by the cam mechanism. Instead, cam 1520 can rotate and push motor 1502 and thereby drivetrain shaft 1524 upward in direction 1500_{D2} until cam 1520 no longer exerts any forces on motor 1502 or drivetrain shaft 1524. As cam 1520 continues to rotate without exerting any forces on motor 1502 or drivetrain shaft 1524, nothing forces motor 1502 and thereby drivetrain shaft 1524 back downward in direction 1500_{D2} to the default position. As a result, a separate return load is needed to achieve the harmonic nature of the tapping motion. In embodiments, resilient member 1530 (e.g., a spring) can be provided between a portion of handle or body portion 1501 and motor 1502. In the embodiment depicted in FIG. 16, when cam 1520 is rotating without exerting any forces on motor 1502 or drivetrain shaft 1524, resilient member 1530 urges motor 1502 and drivetrain shaft 1524 downward to a default position. The combination of the forces imparted by cam 1520 and resilient member 1530 generates the reciprocating forces needed to achieve the harmonic nature of the tapping motion.

In the embodiments described herein where the drivetrain assemblies are configured to generate consistent and controllable power tapping motion and controllable sweeping motion, the bristles of the power toothbrush devices can be driven in a variety of paths as described below.

In embodiments where the power toothbrush device is configured with a drivetrain assembly that generates a substantially pure reciprocating power tapping motion in the direction of the z-axis of the device (e.g., assemblies 400, 500, and 600), the bristles can be driven as shown in FIG. 17. Starting at a default or initial position of a cycle, the motions have no change in amplitude. Then, the bristles can be driven to a maximum amplitude of 2 mm, then to a minimum amplitude of -2 mm, and finally back to the default, ending, or starting position a new cycle. Such drivetrain assemblies can ensure that there is no clockwise or counter-clockwise rotation so that there is no sweeping motion accompanying the reciprocating tapping motion.

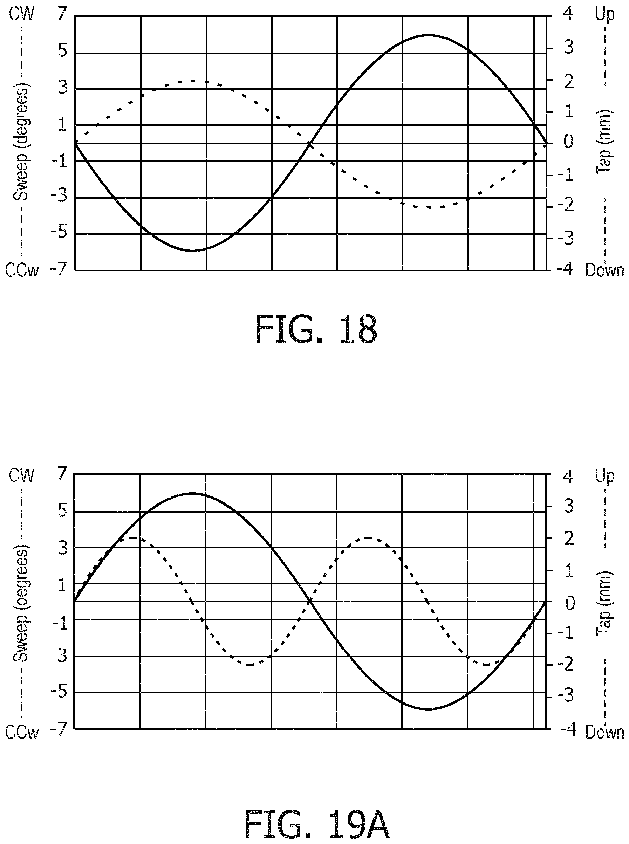

As shown in FIG. 18, the bristles can be driven by drivetrain assemblies described herein to follow a reciprocating tapping motion (such as the one shown in FIG. 17) accompanied by a reciprocating sweeping motion. The sweeping and tapping motions can be phase shifted by 180 degrees in embodiments (such as the one shown in FIG. 18). When the phase angle between the tapping and sweeping motions is 180 degrees (i.e., when the phase angle difference between the motions is 180 degrees), the waveforms of the tapping and sweeping motions are represented as mirror-images of each other. Starting at the beginning of the cycle there is no change in amplitude for either motion and, thereafter, the bristles can be driven in the tapping motion to a positive maximum equal to an amplitude `of 2 mm. Simultaneously, the bristles can be rotated in a sweeping motion to a negative maximum equal to a rotational amplitude of -6 degrees. Thus, at 90 degrees of the cycle, there is maximum tapping translation and a maximum rotation in the counter-clockwise direction for the bristles. At half of the cycle, there is no change in amplitude again for either motion. Thereafter, the bristles can be driven in the tapping motion to a negative maximum equal to an amplitude of -2 mm. Simultaneously, the bristles can be rotated in a sweeping motion to a positive maximum equal to a rotational amplitude of +6 degrees. Thus, at 270 degrees of the cycle, there is a minimum tapping translation and a maximum rotation in the clockwise direction for the bristles. At the end of the cycle, there is no change in amplitude again for either motion. At the same time as the reciprocating tapping motion, the bristles can be driven to more than 5 degrees in the counter-clockwise direction and then back to neutral in the clockwise direction and, further in the clockwise direction to more than 5 degrees. The bristles can be driven back to neutral in the clockwise direction.

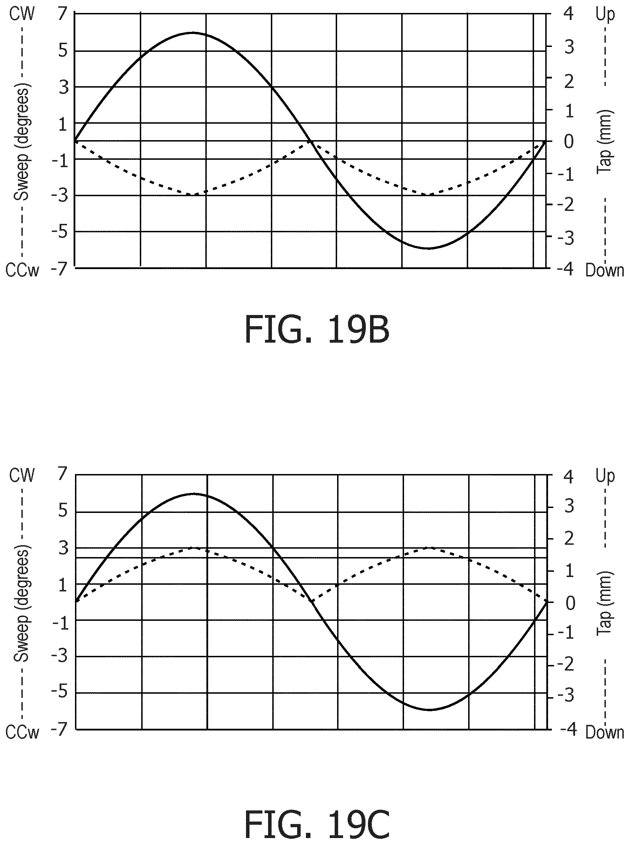

As shown in FIGS. 19A, 19B, and 19C, the bristles can also be driven by the drivetrain assemblies described herein such that the tapping frequency is faster than the sweeping frequency. FIG. 19A shows an embodiment where the bristles are driven to produce two taps (i.e., points of maximum tapping translation) during a single sweeping cycle. FIG. 19B shows another embodiment where the tapping motion is coupled with the sweeping motion in a "down-tap-down-tap" motion. The tapping frequency is faster than the sweeping frequency. More specifically, the tapping frequency is twice as fast as the sweeping frequency. In such embodiments, the maximum tapping occurs while the bristles are pointing directly to the oral surface, thus delivering a high impact force since cantilever beams have higher compressive stiffness than bending stiffness. As the bristles trace a three-dimensional cone in the air, the bristles have a smaller impact zone. The combination of motions depicted in FIG. 19B is a precision motion ideal for interproximal spaces. FIG. 19C shows another embodiment where the tapping motion is coupled with the sweeping motion in a "up-up" motion, where the tapping frequency is twice as fast as the sweeping frequency. In such embodiments, the motion maximizes the chances that bristles contact an oral surface, since the maximum tapping translation occurs at the maximum rotational angle. Additionally in such embodiments, the bristles also contact in a bending bristle scenario, which tends to minimize peak forces. While the peak forces can be minimized, such motion can be used to soften a tapping effect where desired. The combination of motions depicted in FIG. 19C is better for large surfaces rather than interproximal spaces. Unlike the motions depicted in FIG. 18, the sweeping and tapping motions depicted in FIGS. 19A, 19B, and 19C are synchronized or in phase. The waveforms of the motions move in a synchronized manner. In other words, there is no phase angle difference between the sweeping and tapping motions.

The operational effect of the power toothbrush devices and drivetrain assemblies described herein is that they can provide improved cleansing performance at critical areas of the mouth by driving the bristles of the toothbrush in a vertical periodic motion that is parallel to the direction of the bristles or an axis of alignment of the bristles, where the amplitude of the vertical motion is equal to or greater than 0.25 mm (i.e., power tapping). The inventive power tapping motion achieves: (i) deeper reach in gum pockets to remove subgingival plaque, (ii) higher peak forces at surfaces which improve plaque and/or stain removal, (iii) prevents pinning of bristle tufts which improves plaque removal by restoring beneficial tuft sweeping behavior, (iv) more resilience to variables of use like toothbrush placement, toothbrush angle, and toothbrush pressure, and (v) new options for experiential modes for the consumer.

All definitions, as defined and used herein, should be understood to control over dictionary definitions, and/or ordinary meanings of the defined terms.

The indefinite articles "a" and "an," as used herein in the specification and in the claims, unless clearly indicated to the contrary, should be understood to mean "at least one."

The phrase "and/or," as used herein in the specification and in the claims, should be understood to mean "either or both" of the elements so conjoined, i.e., elements that are conjunctively present in some cases and disjunctively present in other cases. Multiple elements listed with "and/or" should be construed in the same fashion, i.e., "one or more" of the elements so conjoined. Other elements may optionally be present other than the elements specifically identified by the "and/or" clause, whether related or unrelated to those elements specifically identified.

As used herein in the specification and in the claims, "or" should be understood to have the same meaning as "and/or" as defined above. For example, when separating items in a list, "or" or "and/or" shall be interpreted as being inclusive, i.e., the inclusion of at least one, but also including more than one, of a number or list of elements, and, optionally, additional unlisted items. Only terms clearly indicated to the contrary, such as "only one of" or "exactly one of," or, when used in the claims, "consisting of," will refer to the inclusion of exactly one element of a number or list of elements. In general, the term "or" as used herein shall only be interpreted as indicating exclusive alternatives (i.e. "one or the other but not both") when preceded by terms of exclusivity, such as "either," "one of," "only one of," or "exactly one of."

As used herein in the specification and in the claims, the phrase "at least one," in reference to a list of one or more elements, should be understood to mean at least one element selected from any one or more of the elements in the list of elements, but not necessarily including at least one of each and every element specifically listed within the list of elements and not excluding any combinations of elements in the list of elements. This definition also allows that elements may optionally be present other than the elements specifically identified within the list of elements to which the phrase "at least one" refers, whether related or unrelated to those elements specifically identified.

In the claims, as well as in the specification above, all transitional phrases such as "comprising," "including," "carrying," "having," "containing," "involving," "holding," "composed of," and the like are to be understood to be open-ended, i.e., to mean including but not limited to. Only the transitional phrases "consisting of" and "consisting essentially of" shall be closed or semi-closed transitional phrases, respectively.

It should also be understood that, unless clearly indicated to the contrary, in any methods claimed herein that include more than one step or act, the order of the steps or acts of the method is not necessarily limited to the order in which the steps or acts of the method are recited.

While several inventive embodiments have been described and illustrated herein, those of ordinary skill in the art will readily envision a variety of other means and/or structures for performing the function and/or obtaining the results and/or one or more of the advantages described herein, and each of such variations and/or modifications is deemed to be within the scope of the inventive embodiments described herein. More generally, those skilled in the art will readily appreciate that all parameters, dimensions, materials, and configurations described herein are meant to be exemplary and that the actual parameters, dimensions, materials, and/or configurations will depend upon the specific application or applications for which the inventive teachings is/are used. Those skilled in the art will recognize, or be able to ascertain using no more than routine experimentation, many equivalents to the specific inventive embodiments described herein. It is, therefore, to be understood that the foregoing embodiments are presented by way of example only and that, within the scope of the appended claims, inventive embodiments may be practiced otherwise than as specifically described and claimed. Inventive embodiments of the present disclosure are directed to each individual feature, system, article, material, kit, and/or method described herein. In addition, any combination of two or more such features, systems, articles, materials, kits, and/or methods, if such features, systems, articles, materials, kits, and/or methods are not mutually inconsistent, is included within the inventive scope of the present disclosure.

## Claims

1. A drivetrain assembly (600, 700, 800, 1000) for a power toothbrush device, the power toothbrush device having a body portion (1001), the drivetrain assembly comprising:
a drivetrain shaft (624, 724, 924, 1024) at least partially contained within the body portion and configured to engage a brush head member (604, 704, 904, 1004) having bristles;
a motor (702, 902, 1002) mounted on the drivetrain shaft and configured to periodically rotate the drivetrain shaft about a first axis (A) of the power toothbrush device; and
an electromagnetic assembly (640, 760, 960, 1050) configured to drive the drivetrain shaft and thereby the brush head member about a second axis (X, B) of the power toothbrush device, different than the first axis, or in a direction (600_{D1}, 900_{D2}, 1000_{D2}) parallel to a third axis (Z) of the power toothbrush device, wherein the third axis (Z) is orthogonal to the second axis and parallel to an axis of alignment of the bristles;
**characterized in that** the electromagnetic assembly comprises:
a magnet (606) connected to the drivetrain shaft;
a stator (640) mounted to a base (608) within the body portion, wherein the stator is configured to generate magnetic fields suitable for interacting with the magnetic field of the magnet to periodically drive the magnet and thereby the drivetrain shaft and the brush head member in the direction parallel to the third axis of the power toothbrush device; and
a bearing (630) on the drivetrain shaft to maintain the movement of the brush head member in the direction parallel to the third axis.

2. The drivetrain assembly of claim 1, wherein the first axis is a central axis of the power toothbrush device, the second axis is perpendicular to the central axis and the third axis, and the third axis is perpendicular to the central axis and the second axis.

3. The drivetrain assembly of claim 1 or 2, wherein the bearing comprises a moveable support member surrounding the drivetrain shaft and parallel flexible flexures (632a, 632b) extending between the moveable support and the base, wherein the parallel flexible flexures constrain the movement of the brush head member in the direction parallel to the third axis.

4. The drivetrain assembly of claim **1,** wherein the electromagnetic assembly comprises:
a voice coil actuator (965) secured to the drivetrain shaft and configured to generate periodic linear movement such that the drivetrain shaft is rotatable about the second axis of the power toothbrush device.

5. The drivetrain assembly of claim **1,** wherein the body portion further comprises a pivot (950) upon which the drivetrain shaft rotates.

6. The drivetrain assembly of claim **1,** wherein the electromagnetic assembly comprises:
a magnet coil (640, 762, 965) separate from the motor (702, 902, 1002) and within the body portion.

7. The drivetrain assembly of claim 6, wherein the electromagnetic assembly further comprises a pivot or hinge (750, 950) arranged along the drivetrain shaft upon which the drivetrain shaft rotates such that the movement in the direction parallel to the third axis of the power toothbrush device is constrained.

8. The drivetrain assembly of claim 6, wherein the magnet coil comprises a linear solenoid actuator.

9. The drivetrain assembly of claim 7, wherein the pivot or hinge is located along the motor.

10. The drivetrain assembly of claim 7, wherein the pivot or hinge is located between the motor and the brush head member.

11. The drivetrain assembly of claim 7, wherein the motor comprises a first side and a second side opposite the first side, wherein the brush head member is positioned on the first side of the motor, and wherein the pivot or hinge is located on the second side of the motor.

12. A power toothbrush device (100), comprising:
a brush head member (104, 604, 704, 904, 1004) having a set of bristles (116);
a body portion (1001) coupled with the brush head member; and
a drivetrain assembly (600, 700, 800, 1000) within the body portion, the drivetrain assembly comprising:
a drivetrain shaft (624, 724, 924, 1024) at least partially contained within the body portion and configured to engage the brush head member (604, 704, 904, 1004);
a motor (702, 902, 1002) mounted on the drivetrain shaft and configured to periodically rotate the drivetrain shaft about a first axis (A) of the power toothbrush device; and
an electromagnetic assembly (640, 760, 960, 1050) configured to drive the drivetrain shaft and thereby the brush head member about a second axis (X, B) of the power toothbrush device, different than the first axis, or in a direction (600_{D1}, 900_{D2}, 1000_{D2}) parallel to a third axis (Z) of the power toothbrush device, wherein the third axis (Z) is orthogonal to the second axis and parallel to an axis of alignment of the set of bristles;
**characterized in that** the electromagnetic assembly comprises:
a magnet (606) connected to the drivetrain shaft;
a stator (640) mounted to a base (608) within the body portion, wherein the stator is configured to generate magnetic fields suitable for interacting with the magnetic field of the magnet to periodically drive the magnet and thereby the drivetrain shaft and the brush head member in the direction parallel to the third axis of the power toothbrush device; and
a bearing (630) on the drivetrain shaft to maintain the movement of the brush head member in the direction parallel to the third axis.

13. The power toothbrush device of claim 12, wherein the first axis is a central axis of the power toothbrush device, the second axis is an x-axis of the power toothbrush device and perpendicular to the central axis, and the third axis is a z-axis of the power toothbrush device and perpendicular to the central axis and the second axis.

14. The power toothbrush device of claim 12, wherein the electromagnetic assembly comprises a stator (640), a voice coil actuator (965), or a linear solenoid actuator (762).

## Patentansprüche

1. Antriebsstranganordnung (600, 700, 800, 1000) für eine elektrische Zahnbürstenvorrichtung, wobei die elektrische Zahnbürstenvorrichtung einen Körperabschnitt (1001) aufweist, die Antriebsstranganordnung umfassend:
eine Antriebswelle (624, 724, 924, 1024), die mindestens teilweise innerhalb des Körperabschnitts enthalten ist und dazu konfiguriert ist, mit einem Bürstenkopfelement (604, 704, 904, 1004), das Borsten aufweist, in Eingriff zu kommen;
einen Motor (702, 902, 1002), der auf der Antriebswelle montiert ist und dazu konfiguriert ist, die Antriebswelle periodisch um eine erste Achse (A) der elektrischen Zahnbürstenvorrichtung zu drehen; und
eine elektromagnetische Anordnung (640, 760, 960, 1050), die dazu konfiguriert ist, die Antriebswelle und dadurch das Bürstenkopfelement um eine zweite Achse (X, B) der elektrischen Zahnbürstenvorrichtung, die sich von der ersten Achse unterscheidet, oder in einer Richtung (600_{D1}, 900_{D2}, 1000_{D2}), die parallel zu einer dritten Achse (Z) der elektrischen Zahnbürstenvorrichtung ist, anzutreiben, wobei die dritte Achse (Z) orthogonal zur zweiten Achse und parallel zu einer Ausrichtungsachse der Borsten ist;
**dadurch gekennzeichnet, dass** die elektromagnetische Anordnung umfasst:
einen Magneten (606), der mit der Antriebswelle verbunden ist;
einen Stator (640), der an einer Basis (608) innerhalb des Körperabschnitts montiert ist, wobei der Stator dazu konfiguriert ist, Magnetfelder zu erzeugen, die zur Wechselwirkung mit dem Magnetfeld des Magneten geeignet sind, um den Magneten und dadurch die Antriebswelle und das Bürstenkopfelement in der Richtung parallel zur dritten Achse der elektrischen Zahnbürstenvorrichtung periodisch anzutreiben; und
ein Lager (630) auf der Antriebswelle, um die Bewegung des Bürstenkopfelements in der Richtung parallel zur dritten Achse aufrechtzuerhalten.

2. Antriebsstranganordnung nach Anspruch 1, wobei die erste Achse eine Mittelachse der elektrischen Zahnbürstenvorrichtung ist, die zweite Achse senkrecht zur Mittelachse und zur dritten Achse ist und die dritte Achse senkrecht zur Mittelachse und zur zweiten Achse ist.

3. Antriebsstranganordnung nach Anspruch 1 oder 2, wobei das Lager ein bewegliches Stützelement, das die Antriebswelle umgibt, und parallele flexible Biegeelemente (632a, 632b), die sich zwischen dem beweglichen Stützelement und der Basis erstrecken, umfasst, wobei die parallelen flexiblen Biegeelemente die Bewegung des Bürstenkopfelements in der Richtung parallel zur dritten Achse einschränken.

4. Antriebsstranganordnung nach Anspruch 1, wobei die elektromagnetische Anordnung umfasst:
eine Schwingspulenbetätigungsvorrichtung (965), die an der Antriebswelle gesichert ist und dazu konfiguriert ist, eine periodische lineare Bewegung zu erzeugen, sodass die Antriebswelle um die zweite Achse der elektrischen Zahnbürstenvorrichtung drehbar ist.

5. Antriebsstranganordnung nach Anspruch 1, wobei der Körperabschnitt weiter einen Drehpunkt (950) umfasst, um den sich die Antriebswelle dreht.

6. Antriebsstranganordnung nach Anspruch 1, wobei die elektromagnetische Anordnung umfasst:
eine Magnetspule (640, 762, 965), die vom Motor (702, 902, 1002) getrennt und innerhalb des Körperabschnitts angeordnet ist.

7. Antriebsanordnung nach Anspruch 6, wobei die elektromagnetische Anordnung weiter einen Drehpunkt oder ein Drehgelenk (750, 950) umfasst, das entlang der Antriebswelle angeordnet ist und um das sich die Antriebswelle dreht, sodass die Bewegung in der Richtung parallel zur dritten Achse der elektrischen Zahnbürstenvorrichtung eingeschränkt ist.

8. Antriebsstranganordnung nach Anspruch 6, wobei die Magnetspule eine lineare Solenoidbetätigungsvorrichtung umfasst.

9. Antriebsstranganordnung nach Anspruch 7, wobei sich der Drehpunkt oder das Drehgelenk entlang des Motors befindet.

10. Antriebsstranganordnung nach Anspruch 7, wobei sich der Drehpunkt oder das Drehgelenk zwischen dem Motor und dem Bürstenkopfelement befindet.

11. Antriebsstranganordnung nach Anspruch 7, wobei der Motor eine erste Seite und eine der ersten Seite gegenüberliegende zweite Seite umfasst, wobei das Bürstenkopfelement auf der ersten Seite des Motors positioniert ist und wobei sich der Drehpunkt oder das Drehgelenk auf der zweiten Seite des Motors befindet.

12. Elektrische Zahnbürstenvorrichtung (100), umfassend:
ein Bürstenkopfelement (104, 604, 704, 904, 1004), das einen Satz von Borsten (116) aufweist;
einen Körperabschnitt (1001), der mit dem Bürstenkopfelement gekoppelt ist; und
eine Antriebsstranganordnung (600, 700, 800, 1000) innerhalb des Körperabschnitts, wobei die Antriebsstranganordnung umfasst:
eine Antriebswelle (624, 724, 924, 1024), die mindestens teilweise innerhalb des Körperabschnitts enthalten ist und dazu konfiguriert ist, mit dem Bürstenkopfelement (604, 704, 904, 1004) in Eingriff zu kommen;
einen Motor (702, 902, 1002), der auf der Antriebswelle montiert ist und dazu konfiguriert ist, die Antriebswelle periodisch um eine erste Achse (A) der elektrischen Zahnbürstenvorrichtung zu drehen; und
eine elektromagnetische Anordnung (640, 760, 960, 1050), die dazu konfiguriert ist, die Antriebswelle und dadurch das Bürstenkopfelement um eine zweite Achse (X, B) der elektrischen Zahnbürstenvorrichtung, die sich von der ersten Achse unterscheidet, oder in einer Richtung (600_{D1}, 900_{D2}, 1000_{D2}), die parallel zu einer dritten Achse (Z) der elektrischen Zahnbürstenvorrichtung ist, anzutreiben, wobei die dritte Achse (Z) orthogonal zur zweiten Achse und parallel zu einer Ausrichtungsachse des Satzes von Borsten ist;
**dadurch gekennzeichnet, dass** die elektromagnetische Anordnung umfasst:
einen Magneten (606), der mit der Antriebswelle verbunden ist;
einen Stator (640), der an einer Basis (608) innerhalb des Körperabschnitts montiert ist, wobei der Stator dazu konfiguriert ist, Magnetfelder zu erzeugen, die zur Wechselwirkung mit dem Magnetfeld des Magneten geeignet sind, um den Magneten und dadurch die Antriebswelle und das Bürstenkopfelement in der Richtung parallel zur dritten Achse der elektrischen Zahnbürstenvorrichtung periodisch anzutreiben; und
ein Lager (630) auf der Antriebswelle, um die Bewegung des Bürstenkopfelements in der Richtung parallel zur dritten Achse aufrechtzuerhalten.

13. Elektrische Zahnbürstenvorrichtung nach Anspruch 12, wobei die erste Achse eine Mittelachse der elektrischen Zahnbürstenvorrichtung ist, die zweite Achse eine x-Achse der elektrischen Zahnbürstenvorrichtung ist und senkrecht zur Mittelachse ist, und die dritte Achse eine z-Achse der elektrischen Zahnbürstenvorrichtung ist und senkrecht zur Mittelachse und zur zweiten Achse ist.

14. Elektrische Zahnbürstenvorrichtung nach Anspruch 12, wobei die elektromagnetische Anordnung einen Stator (640), eine Schwingspulenbetätigungsvorrichtung (965) oder einen linearen Solenoidaktuator (762) umfasst.

## Revendications

1. Ensemble de transmission (600, 700, 800, 1000) pour un dispositif de brosse à dents électrique, le dispositif de brosse à dents électrique présentant une partie de corps (1001), l'ensemble de transmission comprenant :
un arbre de transmission (624, 724, 924, 1024) au moins partiellement contenu à l'intérieur de la partie de corps et configuré pour entrer en prise avec un élément de tête de brosse (604, 704, 904, 1004) présentant des poils ;
un moteur (702, 902, 1002) monté sur l'arbre de transmission et configuré pour faire tourner périodiquement l'arbre de transmission autour d'un premier axe (A) du dispositif de brosse à dents électrique ; et
un ensemble électromagnétique (640, 760, 960, 1050) configuré pour entraîner l'arbre de transmission et ainsi l'élément de tête de brosse autour d'un deuxième axe (X, B) du dispositif de brosse à dents électrique, différent du premier axe, ou dans une direction (600_{D1}, 900_{D2}, 1000_{D2}) parallèle à un troisième axe (Z) du dispositif de brosse à dents électrique, dans lequel le troisième axe (Z) est orthogonal au deuxième axe et parallèle à un axe d'alignement des poils ;
**caractérisé en ce que** l'ensemble électromagnétique comprend :
un aimant (606) relié à l'arbre de transmission ;
un stator (640) monté sur une base (608) à l'intérieur de la partie de corps, dans lequel le stator est configuré pour générer des champs magnétiques adaptés pour interagir avec le champ magnétique de l'aimant afin d'entraîner périodiquement l'aimant et ainsi l'arbre de transmission et l'élément de tête de brosse dans la direction parallèle au troisième axe du dispositif de brosse à dents électrique ; et
un palier (630) sur l'arbre de transmission pour maintenir le mouvement de l'élément de tête de brosse dans la direction parallèle au troisième axe.

2. Ensemble de transmission selon la revendication 1, dans lequel le premier axe est un axe central du dispositif de brosse à dents électrique, le deuxième axe est perpendiculaire à l'axe central et au troisième axe, et le troisième axe est perpendiculaire à l'axe central et au deuxième axe.

3. Ensemble de transmission selon la revendication 1 ou 2, dans lequel le palier comprend un élément de support mobile entourant l'arbre de transmission et des flexions flexibles parallèles (632a, 632b) s'étendant entre le support mobile et la base, dans lequel les flexions flexibles parallèles limitent le mouvement de l'élément de tête de brosse dans la direction parallèle au troisième axe.

4. Ensemble de transmission selon la revendication 1, dans lequel l'ensemble électromagnétique comprend :
un actionneur de bobine acoustique (965) fixé à l'arbre de transmission et configuré pour générer un mouvement linéaire périodique de sorte que l'arbre de transmission puisse tourner autour du deuxième axe du dispositif de brosse à dents électrique.

5. Ensemble de transmission selon la revendication 1, dans lequel la partie de corps comprend en outre un pivot (950) sur lequel l'arbre de transmission tourne.

6. Ensemble de transmission selon la revendication 1, dans lequel l'ensemble électromagnétique comprend :
une bobine magnétique (640, 762, 965) séparée du moteur (702, 902, 1002) et située à l'intérieur de la partie de corps.

7. Ensemble de transmission selon la revendication 6, dans lequel l'ensemble électromagnétique comprend en outre un pivot ou une charnière (750, 950) agencé le long de l'arbre de transmission sur lequel l'arbre de transmission tourne, de sorte que le mouvement dans la direction parallèle au troisième axe du dispositif de brosse à dents électrique soit limité.

8. Ensemble de transmission selon la revendication 6, dans lequel la bobine magnétique comprend un actionneur à solénoïde linéaire.

9. Ensemble de transmission selon la revendication 7, dans lequel le pivot ou la charnière est situé le long du moteur.

10. Ensemble de transmission selon la revendication 7, dans lequel le pivot ou la charnière est situé entre le moteur et l'élément de tête de brosse.

11. Ensemble de transmission selon la revendication 7, dans lequel le moteur comprend un premier côté et un second côté opposé au premier côté, dans lequel l'élément de tête de brosse est positionné sur le premier côté du moteur, et dans lequel le pivot ou la charnière est situé sur le second côté du moteur.

12. Dispositif de brosse à dents électrique (100), comprenant :
un élément de tête de brosse (104, 604, 704, 904, 1004) présentant un ensemble de poils (116) ;
une partie de corps (1001) couplée à l'élément de tête de brosse ; et
un ensemble de transmission (600, 700, 800, 1000) à l'intérieur de la partie de corps, l'ensemble de transmission comprenant :
un arbre de transmission (624, 724, 924, 1024) au moins partiellement contenu à l'intérieur de la partie de corps et configuré pour entrer en prise avec l'élément de tête de brosse (604, 704, 904, 1004) ;
un moteur (702, 902, 1002) monté sur l'arbre de transmission et configuré pour faire tourner périodiquement l'arbre de transmission autour d'un premier axe (A) du dispositif de brosse à dents électrique ; et
un ensemble électromagnétique (640, 760, 960, 1050) configuré pour entraîner l'arbre de transmission et ainsi l'élément de tête de brosse autour d'un deuxième axe (X, B) du dispositif de brosse à dents électrique, différent du premier axe, ou dans une direction (600_{D1}, 900_{D2}, 1000_{D2}) parallèle à un troisième axe (Z) du dispositif de brosse à dents électrique, dans lequel le troisième axe (Z) est orthogonal au deuxième axe et parallèle à un axe d'alignement de l'ensemble de poils ;
**caractérisé en ce que** l'ensemble électromagnétique comprend :
un aimant (606) relié à l'arbre de transmission ;
un stator (640) monté sur une base (608) à l'intérieur de la partie de corps, dans lequel le stator est configuré pour générer des champs magnétiques adaptés pour interagir avec le champ magnétique de l'aimant afin d'entraîner périodiquement l'aimant et ainsi l'arbre de transmission et l'élément de tête de brosse dans la direction parallèle au troisième axe du dispositif de brosse à dents électrique ; et
un palier (630) sur l'arbre de transmission pour maintenir le mouvement de l'élément de tête de brosse dans la direction parallèle au troisième axe.

13. Dispositif de brosse à dents électrique selon la revendication 12, dans lequel le premier axe est un axe central du dispositif de brosse à dents électrique, le deuxième axe est un axe x du dispositif de brosse à dents électrique et perpendiculaire à l'axe central, et le troisième axe est un axe z du dispositif de brosse à dents électrique et perpendiculaire à l'axe central et au deuxième axe.

14. Dispositif de brosse à dents électrique selon la revendication 12, dans lequel l'ensemble électromagnétique comprend un stator (640), un actionneur de bobine acoustique (965) ou un actionneur à solénoïde linéaire (762).
